# EUROPÄISCHE PATENTANMELDUNG

(11) **EP 4 378 657 A1**
(43) Veröffentlichungstag der Anmeldung: **05.06.2024**
(21) Anmeldenummer: 23211112.0
(22) Anmeldetag: 21.11.2023
(51) Int. Cl.: B29C 45/26, B29C 45/27

(54) **SPRITZGUSSWERKZEUG UND VERFAHREN ZUR HERSTELLUNG VON SPRITZGUSS-FORMTEILEN**

(30) Priorität: 23.11.2022 DE 102022131019
(71) Anmelder: Wago Verwaltungsgesellschaft mbH, 32423 Minden (DE)
(72) Erfinder: Weber, Sebastian, 32469 Petershagen (DE); Meyer, Sebastian, 32427 Minden (DE)
(74) Vertreter: Günther, Constantin

(57) **Zusammenfassung**

Die vorliegende Erfindung betrifft ein Spritzgusswerkzeug (1) zur Herstellung von Spritzguss-Formteilen (11a, 11b, 11c) durch Einspritzen von Spritzgussmaterial in eine Kavität (6a, 6c, 6c) mit einer dem herzustellenden Spritzguss-Formteil (11a, 11b, 11c) entsprechenden Kontur, wobei das Spritzgusswerkzeug (1) einen Verteilerkanal (4) für Spritzgussmaterial hat, der an eine Einspritzdüse anschließbar und kommunizierend mit der Kavität (6a, 6c, 6c) verbunden ist. Der Verteilerkanal (4) hat einen Ausgleichsvolumenbereich (A), der ein durch die Art und Anzahl der an den Verteilerkanal (4) angeschlossenen Kavitäten (6a, 6c, 6c) bestimmtes Volumen zur Aufnahme von Spritzgussmaterial beim Spritzgussvorgang hat.

## Beschreibung

Die Erfindung betrifft ein Spritzgusswerkzeug zur Herstellung von Spritzguss-Formteilen durch Einspritzen von Spritzgussmaterial in eine Kavität mit einer dem herzustellenden Spritzguss-Formteil entsprechenden Kontur, wobei das Spritzgusswerkzeug mindestens einen Verteilerkanal für Spritzgussmaterial hat, der kommunizierend mit der Kavität verbunden ist.

Die Erfindung betrifft weiterhin ein Verfahren zur Herstellung von Spritzguss-Formteilen mit einem solchen Spritzgusswerkzeug.

Für die preiswerte Serienherstellung von Formteilen im Spritzguss, insbesondere von Kunststoffformteilen, werden Spritzgießmaschinen eingesetzt, die aus einer zur Aufbereitung von Rohmaterial und Einspritzen des Spritzgussmaterials unter Druck in ein Spritzgusswerkzeug ausgebildete Spritzeinheit und eine das Spritzgusswerkzeug aufnehmende und zum Öffnen und Schließen vorgesehene Schließeinheit hat. Die Spritzeinheit hat in der Regel eine Schneckenwelle, die in einem Zylinder rotierbar geführt ist und im hinteren Bereich einen Granulateinlass und am vorderen, freien Ende eine Maschinendüse hat. Das in der Schnecke aufgeschmolzene Spritzgussmaterial wird durch die Maschinendüse unter Druck in das Spritzgusswerkzeug gespritzt. Die Schließeinheit hat eine auf einem Maschinenrahmen senkrecht angeordnete, düsenseitige Aufspannplatte, die eine düsenseitige Werkzeughälfte trägt. Weiterhin hat die Schließeinheit eine gegenüberliegende, in Richtung der festen Aufspannplatte in der Regel hydraulisch bewegliche Aufspannplatte, die eine auswerferseitige Werkzeughälfte des Spritzgusswerkzeuges trägt.

Zwei Formwerkzeughälften werden mit einer solchen Spritzgusshälfte aufeinander zu bewegt, sodass ihre Oberflächen dicht aufeinander liegen. In den aufeinander liegenden Oberflächen befindet sich dann mindestens eine Kavität mit einer an das herzustellende Spritzguss-Formteil angepassten Formgebung. An dem auswerferseitigen Formwerkzeug ist dann eine Auswerfermechanik vorhanden, die mindestens einen Stößel zum Herausdrücken des hergestellten Spritzguss-Formteils aus der Kavität heraus umfasst. Die Auswerfermechanik kann aber noch weitere Teile haben, um beispielsweise Hinterschnitt-Konturen zu erzeugen.

Die düsenseitige Formwerkzeughälfte kann beispielsweise eine Anbindung an einen Heizkanalverteilerbalken mit der dazugehörigen Heizkanaldüse aufweisen.

DE 10 2011 056 694 B4 offenbart ein Spritzgusswerkzeug, bei dem Formeinsatzhälften von mindestens einem Formeinsatz in Einschubrahmen eingebaut sind und die Einschubrahmen zu einem von dem Rahmenwerkzeug abnehmbaren Einschubmodul miteinander verbindbar sind. Ein düsenseitiger Einschubrahmen hat mindestens eine Düsenöffnung zur Aufnahme mindestens einer zugeordneten Spritzgussdüse der Spritzgussmaterial-Verteileinheit, die an der ersten düsenseitigen Werkzeughälfte angeordnet ist. Damit können die düsenseitigen und auswerferseitigen Werkzeughälften mitsamt der darin eingebauten Formeinsätze insgesamt als individualisierter Werkzeugblock beim Umrüsten von den Aufspannplatten von der Spritzgussmaschine abgenommen werden.

EP 2 464 501 B1 offenbart eine Spritzgussform mit Einlasskanälen für den Zufluss von Spritzgussmaterial. In dem Einlasskanal sind Ausgleichskammern vorgesehen, welche für eine gleichmäßige Verteilung des Spritzgussmaterials über eine Gummisohle eines Schuhs sorgen. Dabei werden automatisch mögliche Volumenunterschiede des Gummiprofils ausgeglichen und/oder automatisch die Menge des eingespritzten Materials dosiert.

EP 0 666 791 B2 beschreibt ein Verfahren zum Spritzgießen von mit ihren Wandungen einen Hohlraum einschließenden Formteilen aus thermoplastischem Kunststoffmaterial, bei welchem die Kunststoffschmelze mit vorgegebener Menge in die Kavität eines Formwerkzeuges eingespritzt wird sowie währenddessen und/oder anschließend mit einem fluidischen Druckmedium, insbesondere Gas beaufschlagt wird, damit die Kunststoffschmelze sich unter Hohlraumbildung längs der Wandungen der Kavität verteilt und an diese anlegt. Zur gezielten Steuerung der Wanddickenverteilung und zur Sicherstellung, dass in die Kavität bzw. das Formnest des Formwerkzeuges jeweils nur ein solches Volumen an thermoplastischem Kunststoffmaterial eingespritzt zu werden braucht, wie es für die Herstellung des betreffenden Formteils benötigt wird, erfolgt eine Einspeisung des Druckmediums in die Kavität und die Kunststoffschmelze zunächst im Wesentlichen nur in Fließrichtung der Kunststoffschmelze. Hierzu sind Hohlnadeln zur Einspeisung der Druckmedien stationär in das Formwerkzeug eingebaut oder ragen mit ihren freien Enden ständig in das Formnest bzw. die Kavität hinein oder sind zeitweilig bis in das Formnest bzw. die Kavität vorschiebbar. Die Hohlnadeln sind an verschiedenen Stellen in der Kavität eingesetzt. Überschüssiges Material kann aus der Kavität über eine Dünnstelle in einen Kanal abgeführt und später als verlorener Zapfen vom Formteil abgetrennt werden.

Ausgehend hiervon ist es Aufgabe der vorliegenden Erfindung, ein verbessertes Spritzgusswerkzeug und ein Verfahren zur Herstellung von Spritzguss-Formteilen mit einem solchen Spritzgusswerkzeug zu schaffen.

Die Aufgabe wird mit dem Spritzgusswerkzeug mit den Merkmalen des Anspruchs 1 und durch das Verfahren mit den Merkmalen des Anspruchs 11 gelöst. Vorteilhafte Ausführungsformen sind in den Unteransprüchen beschrieben.

Es wird vorgeschlagen, dass der Verteilerkanal einen Ausgleichsvolumenbereich hat, der ein durch die Art und Anzahl der an den Verteilerkanal angeschlossenen Kavitäten bestimmtes Volumen zur Aufnahme von Spritzgussmaterial beim Spritzgussvorgang hat. Der an eine Einspritzdüse anschließbare Verteilerkanal kann dabei mehrere Abschnitte mit einer zugehörigen Kavität haben. Die Abschnitte können in unterschiedlichen Formeinsätzen vorhanden sein und bilden im eingebauten Zustand einen gemeinsamen Verteilerkanal, der über die gemeinsame Einspritzdüse mit Spritzgussmaterial versorgt wird.

Damit gelingt eine Ausbalancierung beim Einspritzen des Spritzgussmaterials derart, dass nicht nur die Art der Kavitäten, sondern auch die Anzahl der an den Verteilerkanal angeschlossenen Kavitäten das Ausgleichsvolumen bestimmt.

Insbesondere bei einer Zusammenstellung eines Spritzgusswerkzeuges mit unterschiedlichen Kombinationen von Kavitäten, die an einen gemeinsamen Verteilerkanal mit Spritzgussdüsen angeschlossen werden, kann das Ausgleichsvolumen bzw. gegebenenfalls auch zwei oder mehr Ausgleichsvolumina so an die jeweilige Kombination der Art und Anzahl von Kavitäten angepasst werden, dass Unterschiede in den Schussgewichten und der Fläche ausgeglichen werden.

Bei einer gleichzeitigen Füllung von Kavitäten mit unterschiedlichen Schussgewichten und Artikelabmessungen über einen gemeinsamen Verteilerkanal bzw. eine gemeinsame Einspritzstelle wird über das mindestens eine Ausgleichsvolumen eine Bilanzierung des Spritzgusswerkzeuges gewährleistet. Mit Hilfe des mindestens einen Ausgleichsvolumens kann ein Unterschied in den Schussgewichten und der Fläche der Kavitäten ausgeglichen werden.

So kann bei einem Spritzgusswerkzeug mit mindestens zwei separaten Formeinsätzen, die jeweils eine Kavität für das herzustellende Spritzguss-Formteil (d. h. für den zu fertigenden Artikel) aufweisen, mindestens für einen der Formeinsätze an dem zu der Kavität des Formeinsatzes führenden Verteilerkanal ein Ausgleichsvolumen (zweite Kavität) angeordnet werden. Dieses mindestens eine Ausgleichsvolumen ist dann so bemessen, dass die Summe des Volumens der Kavität und zugehörigen Ausgleichsvolumens für ein Spritzguss-Formteil für jeden Formeinsatz, der an denselben Verteilerkanal angeschlossenen ist, gleich ist.

Die Formeinsätze können dabei integral in einem Spritzgusswerkzeug ausgeführt sein. Vorteilhaft ist jedoch ein Spritzgusswerkzeug, bei dem wahlweise unterschiedliche Formeinsätze für unterschiedliche oder gleiche Spritzguss-Formteile aufgenommen werden können.

Mit Hilfe der Ausgleichsvolumina wird dann erreicht, dass das Schussgewicht für jeden Formeinsatz, d. h. für jedes herzustellende Spritzguss-Formteil für über einen gemeinsamen Verteilerkanal versorgte Formeinsätze ausbalanciert ist.

Der Ausgleichsvolumenbereich kann eine Aufnahmeöffnung haben. Weiterhin kann das Spritzgusswerkzeug einen Ausgleichseinsatz aufweisen, der in die Aufnahmeöffnung wahlweise einsetzbar ist. Der Ausgleichseinsatz kann eine mit dem Verteilerkanal kommunizierende Vertiefung zur Bereitstellung eines Ausgleichsvolumens haben. Damit können unterschiedliche Ausgleichseinsätze mit voneinander unterschiedlichen Volumina wahlweise in die Aufnahmeöffnung eingesetzt werden.

Ein solches Spritzgusswerkzeug mit mindestens einer kommunizierend mit dem Verteilerkanal verbundenen Aufnahmeöffnung hat den Vorteil, dass durch die selektive Bestückung mit einem ausgewählten Ausgleichseinsatz das jeweils benötigte Ausgleichsvolumen an das Schussgewicht der anderen an denselben Verteilerkanal angeschlossenen Kavitäten (z. B. Formeinsätzen) angepasst werden kann, um für jeden Formeinsatz in etwa dasselbe Schussgewicht bereitzustellen.

Die Ausgleichseinsätze können eine Stirnseite mit einer Vertiefung haben, die das Ausgleichsvolumen bereitstellt. Dabei kann eine radial nach außen führende Nut in die Vertiefung übergehen. Der Verteilerkanal ist dann über die Nut kommunizierend mit der Vertiefung verbindbar, wenn der Ausgleichseinsatz in die Aufnahmeöffnung des Spritzgusswerkzeuges eingesteckt ist.

Das Ausgleichsvolumen wird somit als Abzweig von dem zugeordneten Verteilerkanal über die Nut an den Verteilerkanal angeschlossen.

Die Ausgleichseinsätze können beispielsweise zylinderförmig sein. Dabei ist es denkbar, dass zusätzliche unsymmetrische Konturen vorhanden sind, die eine vorbestimmte Lage des Ausgleichseinsatzes in Bezug auf den zugehörigen Verteilerkanal sicherstellen. Hierzu können Abflachungen, Mulden oder Vorsprünge (Nasen) an dem Ausgleichseinsatz vorhanden sein.

Das Spritzgusswerkzeug kann ein Set von Ausgleichseinsätzen umfassen, die an ihrer Stirnseite Vertiefungen mit unterschiedlichen Durchmessern voneinander haben.

Damit wird ein Spritzgusswerkzeug-Set bereitgestellt, das einerseits beispielsweise verschiedene in einen Einschubrahmen einsetzbare Formeinsätze mit jeweils mindestens einer Kavität zur Herstellung eines Spritzguss-Formteils und mindestens einen in die Kavität führenden Verteilerkanal und Aufnahmeöffnungen an dem Verteilerkanal sowie ein Set unterschiedliche Ausgleichseinsätze für unterschiedliche Ausgleichsvolumina hat.

Bei der Zusammenstellung eines Spritzgusswerkzeuges mit mehreren Formwerkzeugen zur Herstellung gleicher oder unterschiedlicher Spritzguss-Formteile können dann die Ausgleichseinsätze mit den benötigten Ausgleichsvolumina ausgewählt und so in die Ausgleichsöffnungen der Formeinsätze eingesetzt werden, dass für jeden Formeinsatz das an den gemeinsamen Verteilerkanal angeschlossene Volumen aus Kavität und Ausgleichsvolumen für die Zusammenstellung möglichst gleich ist.

Beim Spritzgusswerkzeug kann ein Set von Ausgleichseinsätzen vorhanden sein, die mindestens zwei unterschiedliche Außendurchmesser haben. Das Spritzgusswerkzeug hat dabei durch die Kavitäten bestimmte Aufnahmeöffnungen mit einem Durchmesser, der ein an die Kavitäten angepasstes Ausgleichsvolumen durch Aufnahme eines hinsichtlich der Aufnahmeöffnung entsprechenden Durchmessers und des Ausgleichsvolumen geeignet ausgewählt ist.

Mit Hilfe von unterschiedlichen Durchmessern für die Aufnahmeöffnungen und Ausgleichseinsätzen können kleine und große Ausgleichsvolumen voneinander getrennt gehandhabt werden. Damit können auch beispielsweise je nach Durchmesser des Ausgleichseinsatzes und der zugehörigen Ausgleichsöffnung unterschiedliche Staffelungen von Ausgleichsvolumina bereitgestellt werden. Bei einem Ausgleichseinsatz mit größerem Durchmesser kann aber auch ein kleines Ausgleichsvolumen im Vergleich zu einem Ausgleichseinsatz mit kleinerem Durchmesser bereitgestellt werden.

Zwei oder mehr Kavitäten können mit einem Verteilerkanal verbunden sein, wobei der Verteilerkanal kommunizierend mit mindestens einem Ausgleichsvolumen verbunden ist. Die Lage eines der Ausgleichsvolumen zu einer der Kavitäten und das mit dem Ausgleichsvolumen bereitgestellte Volumen können durch die Kombination der Kavitäten bestimmt sein.

Der Ausgleichsvolumenbereich für eine Kavität kann beispielsweise als Abzweig an dem Verteilerkanal im Bereich des Übergangs des Verteilerkanals in die zugehörige Kavität angeschlossen sein. Damit wird erreicht, dass das Ausgleichsvolumen in räumlicher Nähe zu der zugehörigen Kavität angeordnet ist. Damit kann beispielsweise eine kontinuierliche Befüllung der Kavität und des Ausgleichsvolumens sichergestellt werden.

Bei mindestens einer an jeweils den Verteilerkanal angeschlossenen Kavität kann jeweils benachbart zu einem Übergang des Verteilerkanals in eine Kavität ein Ausgleichsvolumen an dem Verteilerkanal angeschlossen sein. So ist denkbar, dass es auch Kavitäten gibt, die kein Ausgleichsvolumen aufweisen. Hierbei handelt es sich in der Regel um die Kavität mit dem größten Volumen, welche für alle anderen an den Verteilerkanal bzw. die gemeinsame Spritzgussdüse angeschlossenen Kavitäten das Schussgewicht vorgeben.

Das Spritzgusswerkzeug kann eine Spritzgussmaterial-Verteileinheit mit einem düsenseitigen Einbaurahmen und einem auswerferseitigen Einbaurahmen haben. Der düsenseitige Einbaurahmen und/oder der auswerferseitige Einbaurahmen kann zur Aufnahme von Formeinsätzen ausgebildet sein, welche jeweils mindestens eine Kavität aufweisen.

Die Verteilerkanäle können mit den Ausgleichsvolumenbereichen in den Formeinsätzen oder in den düsenseitigen Einbaurahmen und/oder dem auswerferseitigen Einbaurahmen eingebracht sein.

Vorteilhaft ist es, wenn hierzu Aufnahmeöffnungen mit den Verteilerkanälen in den Formeinsätzen verbunden sind, in die dann jeweils zur Ausbalancierung des Schussgewichts passend ausgewählte Ausgleichseinsätze mit entsprechenden Ausgleichsvolumina eingesetzt werden. Damit können bei einer Zusammenstellung unterschiedlicher Formeinsätze die an den Verteilerkanal angeschlossenen Volumen zur Aufnahme von Spritzgussmaterial so ausbalanciert werden, dass jeder an dieselbe Spritzgussdüse angeschlossene Formeinsatz in etwa dasselbe Aufnahmevolumen aufweist.

Der Ausgleich kann aber auch durch Ausgleichsvolumina in Verteilerkanälen des Einbaurahmens vorhanden sein, die dann jeweils zu einem Formeinsatz führen. Dies hängt von dem konstruktiven Aufbau des Spritzgusswerkzeuges und der Einbaurahmen ab.

Die Erfindung wird nachfolgend anhand der beigefügten Zeichnungen näher erläutert. Es zeigen:
- Figur 1: - Skizze einer Draufsicht auf eine Werkzeughälfte eines Spritzgusswerkzeuges;
- Figur 2: - perspektivische Ansicht einer ersten Gruppe von Spritzguss-Formteilen mit Ausgleichsmaterialabschnitten;
- Figur 3: - perspektivische Ansicht aus Figur 2 mit Ausgleichseinsätzen;
- Figur 4: - perspektivische Ansicht einer zweiten Gruppe von Spritzguss-Formteilen mit Ausgleichsmaterialabschnitten;
- Figur 5: - perspektivische Ansicht aus Figur 4 mit Ausgleichseinsätzen;
- Figur 6: - Skizze eines Sets von Ausgleichseinsätzen;
- Figur 7 a), b): - Draufsicht auf die erste und zweite Gruppe von Spritzguss-Formteilen mit Ausgleichseinsätzen;
- Figur 8 a), b): - Draufsicht auf die erste und zweite Gruppe von Spritzguss-Formteilen mit Ausgleichsmaterialabschnitten.

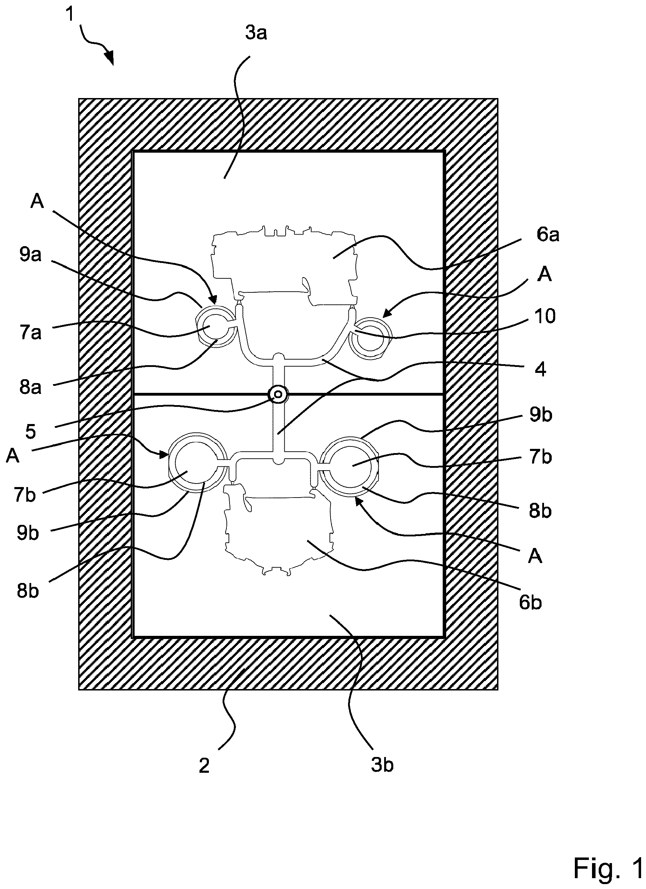

Figur 1 zeigt eine perspektivische Ansicht eines Spritzgusswerkzeuges 1, das einen Einbaurahmen 2 zur Aufnahme von einer Gruppe von Formeinsätzen 3a, 3b hat. Prinzipiell ist die Anzahl der Formeinsätze 3a, 3b einer Gruppe nicht auf die dargestellten zwei Formeinsätze 3a, 3b beschränkt. Vielmehr kann eine beliebige Anzahl von mindestens zwei Formeinsätzen 3a, 3b eine Gruppe bilden.

Das Spritzgusswerkzeug 1 hat einen Verteilerkanal 4, der mit mehreren Abschnitten in dem dargestellten Ausführungsbeispiel in den separaten Formeinsätzen 3a, 3b eingebracht ist. Die Abschnitte des Verteilerkanals 4 sind an einem gemeinsamen Einspritzpunkt 5 für eine Spritzgussmaterial-Einspritzdüse angeschlossen.

Die einen gemeinsamen Verteilerkanal 4 bildenden Abschnitte münden dabei in jeweils mindestens eine Kavität 6a, 6b. Die Kavitäten 6a, 6b haben jeweils eine Kontur und Formgebung in dreidimensionaler Richtung, durch die die Form des jeweils mit einer Kavität 6a, 6b herzustellenden Spritzguss-Formteils bestimmt wird. Die Herstellung eines Spritzguss-Formteils erfolgt durch Einspritzen von Spritzgussmaterial über die gemeinsame Spritzgussmaterial-Einspritzdüse und den sich zu der Gruppe von Kavitäten 6a, 6b verzweigenden Abschnitten des gemeinsamen Verteilerkanals 4 in die an die Zweige des Verteilerkanals 4 angeschlossenen Kavitäten 6a, 6b der Gruppe.

Wenn nun das Einspritzvolumen für die jeweiligen Abzweige von der Einspritzdüse der gemeinsamen Einspritzstelle 5 in den dargestellten verschiedenen Abzweigen des gemeinsamen Verteilerkanals 4 unterschiedlich ist, dann ist eine gleichmäßige Befüllung der Kavitäten 6a, 6b nicht mehr sicher gewährleistet. Dies gilt insbesondere für den Fall, dass unterschiedliche Spritzguss-Formteile mit unterschiedlichen Volumina gleichzeitig über einen gemeinsamen Verteilerkanal 4 versorgt werden. So ist erkennbar, dass die obere Kavität 6a eine größere Fläche und damit ein größeres Volumen aufnimmt, als die untere Kavität 6b.

Um nun die ausgehend von dem gemeinsamen Einspritzpunkt 5 in die verschiedenen Abzweigungen des Verteilerkanals 4 eingebrachten Spritzgussvolumina auszubalancieren, wird nun mittels von Ausgleichsvolumina 7, die kommunizierend mit dem Verteilerkanal 4 verbunden sind, jeweils für jeden vom gemeinsamen Einspritzpunkt 5 ausgehenden Abzweig des gemeinsamen Verteilerkanals 4 das gleiche Schussgewicht, d. h. das gleiche Aufnahmevolumen für Spritzgussmaterial eingestellt.

Um das kleinere Volumen der unteren Kavität 6b an das größere Volumen der oberen Kavität 6a anzugleichen, sind die Ausgleichsvolumina 7b für diesen unteren Formeinsatz 3b erkennbar größer, als die Ausgleichsvolumina 7a für den oberen Formeinsatz 3a.

In dem dargestellten Ausführungsbeispiel sind an beiden Zweigen des Verteilerkanals 4 im jeweiligen Formeinsatz 3a, 3b jeweils benachbart zur Einmündung in die zugeordnete Kavität 6a jeweils ein Ausgleichsgewicht 7a bzw. 7b vorhanden. Dies stellt eine symmetrische Befüllung der jeweiligen Kavität 6a, 6b mit einer Aufnahme überschüssigen Spritzgussmaterials nahe der jeweiligen Einmündungsstelle in die Kavität 6a, 6b sicher.

Je nach Größe und Führung der einzelnen Abzweige des gemeinsamen Verteilerkanals 4 in die zugehörige Kavität 6a, 6b kann die Größe der Ausgleichsvolumina für eine gemeinsame Kavität 6a, 6b auch unterschiedlich sein, um damit ein unterschiedliches Füllverhalten an mehreren Einmündungsstellen in eine gemeinsame Kavität 6a, 6b mit Hilfe der Ausgleichsvolumina 7a, 7b auszubalancieren. Damit soll annähernd das gleiche Füllverhalten für alle Einmündungsstellen einer Kavität 6a, 6b erreicht werden.

Die Ausgleichsvolumina 7a, 7b können, wie die Kavitäten 6a, 6b auch, direkt in das jeweilige Formwerkzeug 3a, 3b als Ausgleichs-Kavität eingebracht werden. Dies ist als einfache Variante sinnvoll, wenn die Zusammenstellung der Gruppe von Kavitäten 6a, 6b bzw. optional einer Gruppe von unterschiedlichen Formwerkzeugen 3a, 3b für die unterschiedlichen Kavitäten 6a, 6b bekannt ist und unverändert bleibt.

Wenn nun jedoch im Betrieb unterschiedliche Gruppen von Formwerkzeugen 3a, 3b von unterschiedlicher Art und Anzahl zusammengestellt werden, die jeweils über einen gemeinsamen Einspritzpunkt 5 versorgt werden und damit einen gemeinsamen zusammenwirkenden Verteilerkanal 4 bilden, ist eine Adaption der Größe der Ausgleichsvolumina 7a, 7b hilfreich. Daher haben die Formwerkzeuge 3a, 3b in dem dargestellten Ausführungsbeispiel Aufnahmeöffnungen 9a, 9b, die zur Aufnahme von Ausgleichseinsätzen 8a, 8b vorgesehen sind.

Die Aufnahmeöffnungen 9a, 9b können dieselbe Form, beispielsweise denselben Durchmesser haben, sodass dann in die Formeinsätze 3a, 3b eine Art von Ausgleichseinsätzen 8a, 8b mit der einheitlichen Form und dem einheitlichen Durchmesser eingesetzt werden können.

In dem dargestellten Ausführungsbeispiel ist eine andere Option gezeigt, bei der (beispielsweise zwei) unterschiedliche Aufnahmeöffnungen 9a, 9b mit unterschiedlicher Form voneinander vorgesehen sind. In dem dargestellten Ausführungsbeispiel sind die Aufnahmeöffnungen 9a, 9b zylinderförmig. Sie unterscheiden sich durch unterschiedliche Durchmesser voneinander. So können beispielsweise zwei Arten von Aufnahmeöffnungen 9a, 9b und entsprechend zwei unterschiedliche Arten von Ausgleichseinsätzen 8a, 8b in einem Set vorhanden sein, die sich durch entsprechend zwei unterschiedliche Durchmesser voneinander unterscheiden. Gleichermaßen können aber auch drei, vier oder mehr unterschiedliche Arten von Ausgleichseinsätzen bedarfsweise vorgesehen werden.

An der Stirnseite der Ausgleichseinsätze 8a, 8b ist dann eine Ausgleichskavität in Form eines Hohlraums eingebracht, dessen Volumen das Ausgleichsvolumen 7a, 7b bestimmt.

Dieses Ausgleichsvolumen 7a, 7b ist dann durch entsprechende Ausrichtung über eine Nut 10 kommunizierend mit dem angrenzenden Abschnitt des Verteilerkanals 4 verbunden. Alternativ zur Nut 10 können die Ausgleichseinsätze 8a, 8b auch eine umseitig geschlossene Öffnung aufweisen, über die die Ausgleichsvolumina 7a, 7b mit dem angrenzenden Abschnitt des Verteilerkanals 4 kommunizieren.

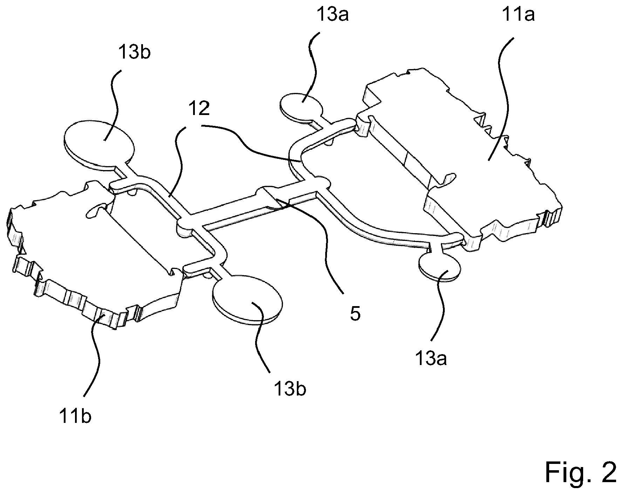

Figur 2 zeigt eine perspektivische Ansicht von Spritzguss-Formteilen 11a, 11b, die mit dem Spritzgusswerkzeug 1 aus Figur 1 durch Einspritzen von Kunststoffmaterial als Spritzgussmaterial hergestellt wurden. Es ist erkennbar, dass ausgehend von der gemeinsamen Einspritzstelle 5 Stege 12 zu den Spritzguss-Formteilen 11a, 11b führen. Die Stege 12 entsprechen der Form und dem Verlauf der Verteilerkanäle 4. Benachbart zu der Einmündung in das jeweilige Spritzguss-Formteil 11a, 11b, d. h. die zugehörige Kavität 6a, 6b sind die der Form und Größe der Ausgleichsvolumina 7a, 7b entsprechende Ausgleichsmaterialabschnitte 13a, 13b vorhanden.

Das Volumen des kleineren Spritzguss-Formteils 11a entspricht zusammen mit dem Volumen der zum gemeinsamen Einspritzpunkt 5 führenden Stegen 12 und dem Ausgleichsmaterial 13b dem Volumen des größeren Spritzguss-Formteils 11b zusammen mit dem von dem gemeinsamen Einspritzpunkt 5 zu diesem Spritzguss-Formteil 11b führenden Stegen und Ausgleichsmaterialien 13a.

Damit ist das zu den beiden Spritzguss-Formteilen 11a, 11b der zweiteiligen Gruppe führende Volumen, d. h. das Schussgewicht, ausbalanciert. Das sogenannte Schussgewicht ist für den vom Einspritzpunkt 5 gesehen rechten Teil der Gruppe annähernd gleich zum Schussgewicht des linken Teils der Gruppe.

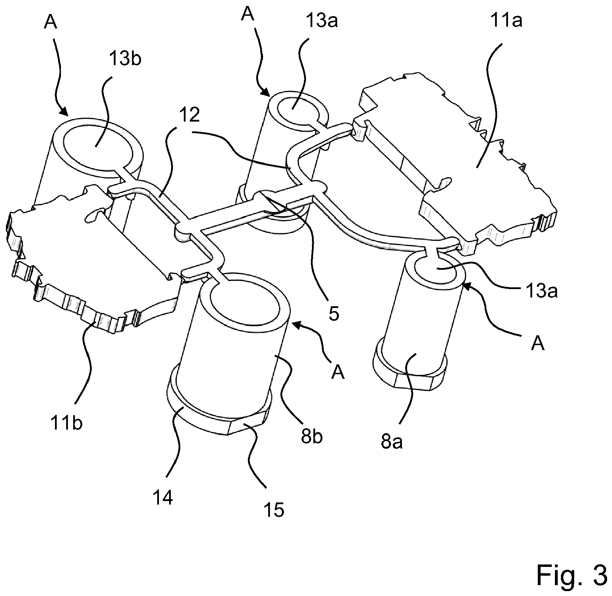

Figur 3 zeigt die Darstellung der Spritzguss-Formteile 11a, 11b aus Figur 2 nunmehr zusammen mit den jeweiligen Ausgleichseinsätzen 8a, 8b. Erkennbar ist, dass diese zylinderförmig sind und zwei voneinander unterschiedliche Durchmesser haben. An der Stirnseite der zylinderförmigen Ausgleichseinsätze 8a, 8b ist eine durch einen Rand (Kragen) begrenzte Vertiefung vorhanden, die die Ausgleichsmassen 13a, 13b aufnimmt. Die Vertiefung bestimmt durch ihren Durchmesser und ihre Tiefe das gewünschte Ausgleichsvolumen 7a, 7b, das für die an einen gemeinsamen Einspritzpunkt 5 angeschlossenen Bereiche der Gruppe von Kavitäten 6a, 6b und zugehörigen Spritzguss-Formteilen 11a, 11b zu einem ausbalancierten Schussgewicht führt.

Für eine kommunizierende Verbindung mit dem angrenzenden Verteilerkanal 4 muss die Nut 10 auf den angrenzenden Verteilerkanal 4 bzw. den hierdurch hergestellten Steg 12 ausgerichtet sein. Dies gelingt durch eine geeignete Ausrichtungskontur im Spritzgusswerkzeug 1 bzw. dem jeweiligen Formwerkzeug 3a, 3b und eine korrespondierende Kontur am Ausgleichseinsatz 8a, 8b. In dem dargestellten Ausführungsbeispiel ist an dem Ende, das dem stirnseitigen Ausgleichsvolumen 7a, 7b gegenüberliegt, ein radial vorstehender Kragen 14 vorhanden, der eine Abflachung 15 als Codier- und Ausrichtungskontur hat. Damit kann der Ausgleichseinsatz 8a, 8b nur in einer solchen Ausrichtung in eine entsprechend kodiert konturierte Aufnahmeöffnung 9a, 9b eingesetzt werden, die den Übergang der Nut 10 in den angrenzenden Verteilerkanal 4 sicherstellt.

Diese Ausrichtungskontur 15 kann beispielsweise in der Draufsicht gegenüberliegend zur Nut 10 angeordnet sein.

Denkbar sind aber auch andere Ausrichtungskonturen, wie beispielsweise vorstehende Nasen, Mulden und dergleichen, die von einer symmetrischen Gestaltung des Ausgleichseinsatzes 8a, 8b abweichen.

Denkbar ist aber auch, dass die Ausgleichseinsätze 8a, 8b insgesamt eine unsymmetrische Kontur haben, wie beispielsweise eine rechteckige Kontur, die einen Einsatz in die Aufnahmeöffnung 9a, 9b nur auf ein oder zwei Arten erlauben, durch die eine Ausrichtung der Nut 10 auf den Verteilerkanal 4 sichergestellt wird.

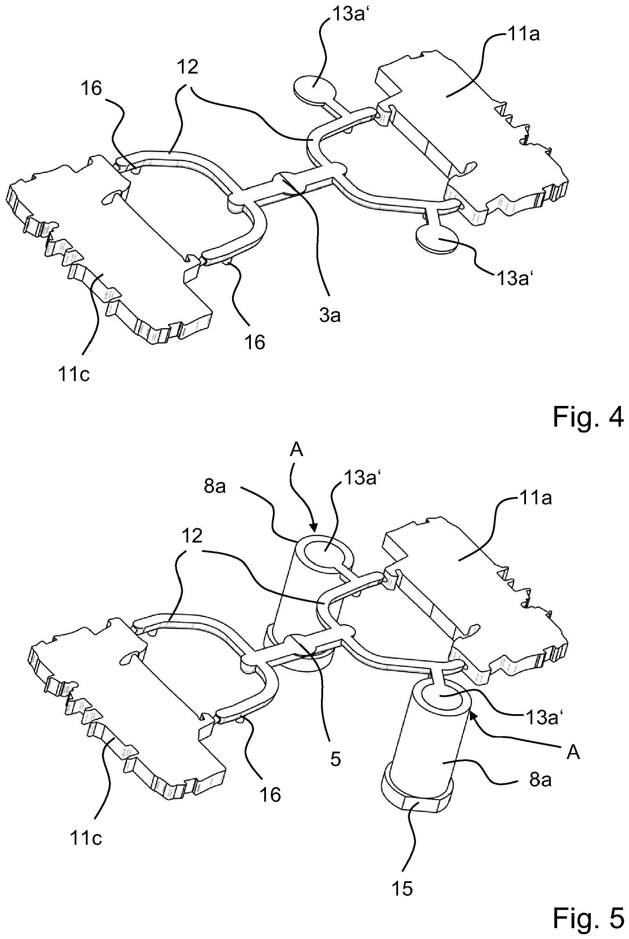

Figur 4 zeigt eine andere Gruppe von Spritzguss-Formteilen 11a, 11c. Dabei wird deutlich, dass das bislang im ersten Ausführungsbeispiel größte Spritzguss-Formteil 11a nunmehr ein kleineres Volumen, als das weitere Spritzguss-Formteil 11c hat. Dies ist der Grund dafür, dass an dem ersten Spritzguss-Formteil 11a auch noch Ausgleichsvolumina 7a mit dem Ausgleichsmaterial 13a vorgesehen war. Dies wäre bei Beschränkung auf die vorbeschriebene erste Art der Gruppe an sich nicht notwendig, sofern die größte Kavität 6a einer Gruppe das Schussgewicht bestimmt.

Dies kann jedoch bei einer variablen Zusammenstellung von unterschiedlichen Kavitäten 6a, 6b, 6c zu einer Gruppe nicht sichergestellt werden.

In dem Ausführungsbeispiel nach Figur 4 bildet das Spritzguss-Formteil 11c das größte mit dem Spritzgusswerkzeug 1 herzustellende Bauteil und legt damit das größte Schussgewicht fest. Für dieses Spritzguss-Formteil 11c und die zugehörige Kavität 6c ist dann keine Aufnahmeöffnung 9a, 9b zum Einsatz eines Ausgleichseinsatzes 8a, 8b erforderlich.

In dem Formwerkzeug 3a, 3b kann aber auch für eine solche Kavität 6c dennoch vorsorglich eine Ausgleichsöffnung 9a, 9b angrenzend am Verteilerkanal 4 vorgesehen werden. Diese Ausgleichsöffnung 9a, 9b kann dann mit einem Ausgleichseinsatz 8a, 8b bestückt werden, der eine geschlossene Stirnseite und damit ein Ausgleichsvolumen von Null hat. Für den Fall, dass eine Zusammenstellung einer Gruppe doch noch erfolgt, bei der eine Kavität 6a, 6b größer ist, kann dann immer noch das benötigte Ausgleichsvolumen eingestellt werden.

In dem Ausführungsbeispiel sind an den Stegen 12 nach unten abragende kleine Nasen 16 erkennbar. Diese sind auch an den anderen Abschnitten der Stege 12 vorhanden. Sie stellen kein Ausgleichsvolumen 7a, 7b im Sinne der vorliegenden Erfindung dar. Ihr Volumen ist viel zu klein, um zu einer wirksamen Ausbalancierung des Schussgewichts zu führen. Solche Nasen sind vielmehr durch bewusste Vertiefung zur Lagefixierung beim Erkalten und Auswerfen vorhanden oder entstehen durch Führungsöffnungen für Stößel eines Auswerferwerkzeuges auf der Auswerferseite des Formwerkzeuges.

Figur 5 zeigt das Ausführungsbeispiel aus Figur 4 in perspektivischer Ansicht mit den Ausgleichseinsätzen 8a und den in dem stirnseitigen Ende aufgenommenen Ausgleichsmassen 13a.

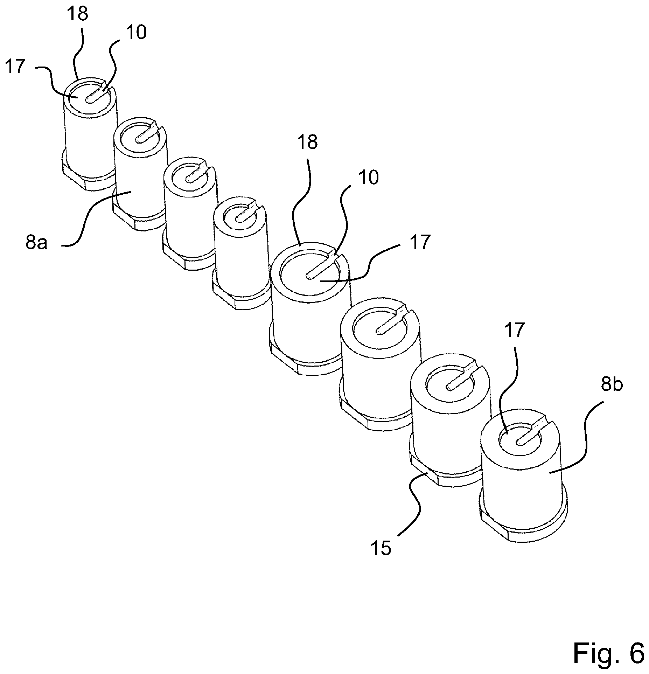

Figur 6 zeigt ein Set von Ausgleichseinsätzen 8a, 8b. Das Set besteht aus zwei unterschiedlichen Arten von zylinderförmigen Ausgleichseinsätzen 8a, 8b mit unterschiedlichem Durchmesser.

Diese Ausgleichseinsätze 8a, 8b haben an ihrer Stirnseite jeweils eine Ausgleichs-Kavität 17 mit unterschiedlichen Durchmessern. Auch die Tiefen der Ausgleichs-Kavitäten 17 können sich für die Ausgleichseinsätze 8a, 8b eines Sets voneinander unterscheiden. Damit werden unterschiedliche Ausgleichsvolumina 7a, 7b bereitgestellt. Durch die Auswahl eines geeigneten Ausgleichseinsatzes 8a, 8b mit dem zur Ausbalancierung des Schussgewichts benötigten Ausgleichsvolumen 7a, 7b können damit die Formeinsätze 3a, 3b bei der Zusammenstellung einer Gruppe von Formeinsätzen 3a, 3b und damit einer Gruppe von Kavitäten 6a, 6b so aufeinander abgestimmt werden, dass die Schussgewichte der an einer gemeinsamen Einspritzstelle 5 mit der durch einen gemeinsamen Verteilerkanal 4 bildenden Kavitäten 6a, 6b jeweils dasselbe Spritzgussvolumen aufnehmen.

Erkennbar ist auch, dass die Ausgleichs-Kavitäten 17 an den Stirnseiten der Ausgleichseinsätze 8a, 8b durch einen umlaufenden Rand 18 begrenzt sind, der durch eine radial nach außen führende Nut 10 durchbrochen ist.

Die Tiefe der Nut 10 kann tiefer als die Tiefe der Ausgleichs-Kavität 17 sein. Durch die Gestaltung der Nut 10 kann das Fließverhalten beeinflusst werden.

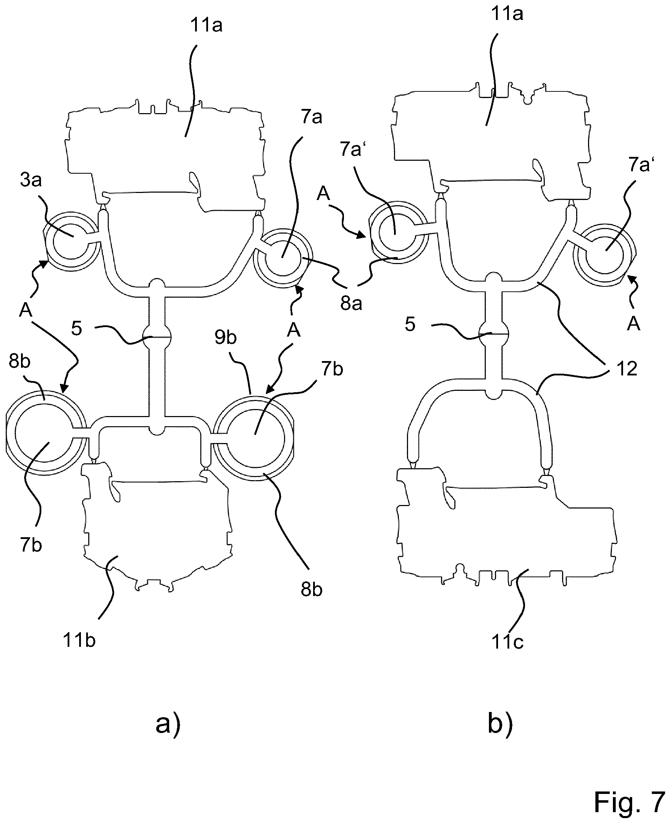

Figur 7 a) und b) zeigt eine Draufsicht auf die in Figuren 1 bis 3 dargestellte erste Gruppe und in Figuren 4 und 5 dargestellte zweite Gruppe von Spritzguss-Formteilen 11a, 11b, 11c.

Im Vergleich der Figur 7 a) und b) ist erkennbar, dass für das gleiche Spritzguss-Formteil 11a bei der linken Gruppe (Figur 7a) ein geringes Ausgleichsvolumen 7a gewählt wurde, als bei der anderen Zusammenstellung der Gruppe in Kombination mit dem größeren Spritzguss-Formteil 11c (Figur 7b).

Es ist damit nicht notwendig, dass unabhängig von der Zusammenstellung der Gruppe ein einziges Schussgewicht, d. h. ein einziges Einspritzvolumen pro Formwerkzeug 3a, 3b maßgeblich ist. Vielmehr ist angestrebt, dass das Schussgewicht für die jeweils zusammengestellte Gruppe ausgehend von dem gemeinsamen Einspritzpunkt 5 gleich ist. Dies kann wie dargestellt bei der Zusammenstellung der Gruppe nach Figur 7 b) zu einem höheren Schussgewicht pro Spritzguss-Formteil 11a, 11b und daran angeschlossenen Volumina führen, als für die in Figur 7 a) dargestellte Gruppe.

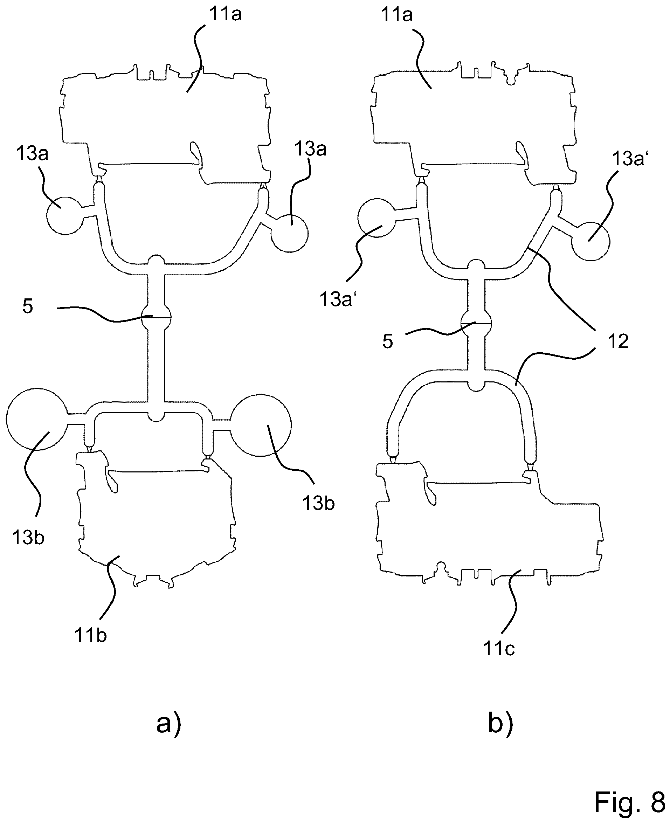

Figur 8 a) und b) zeigt nochmals eine Draufsicht auf die nach Einspritzen des Spritzgussmaterials hergestellten Spritzguss-Formteile 11a, 11b, 11c mit den daran angeformten Stegen 12 und Ausgleichsmassen 13a, 13a`, 13b nach der Entnahme aus dem Spritzgusswerkzeug 1.

### Bezugszeichen

- 1: Spritzgusswerkzeug
- 2: Einbaurahmen
- 3a, 3b: Formeinsatz/Formwerkzeug
- 4: Verteilerkanal
- 5: Einspritzpunkt
- 6a, 6b, 6c: Kavitäten
- 7, 7a, 7b: Ausgleichsvolumina/Ausgleichsgewicht
- 8a, 8b: Ausgleichseinsätze
- 9a, 9b: Aufnahmeöffnungen
- 10: Nut
- 11a, 11b, 11c: Spritzguss-Formteile
- 12: Stege
- 13a, 13a`, 13b: Ausgleichsmaterialabschnitte/Ausgleichsmassen
- 14: Kragen
- 15: Abflachung/Ausrichtungskontur
- 16: Nasen
- 17: Ausgleichs-Kavität
- 18: umlaufender Rand

## Patentansprüche

1. Spritzgusswerkzeug (1) zur Herstellung von Spritzguss-Formteilen (11a, 11b, 11c) durch Einspritzen von Spritzgussmaterial in eine Kavität (6a, 6c, 6c) mit einer dem herzustellenden Spritzguss-Formteil (11a, 11b, 11c) entsprechenden Kontur, wobei das Spritzgusswerkzeug (1) einen Verteilerkanal (4) für Spritzgussmaterial hat, der an eine Einspritzdüse anschließbar und kommunizierend mit der Kavität (6a, 6c, 6c) verbunden ist, **dadurch gekennzeichnet, dass** der Verteilerkanal (4) einen Ausgleichsvolumenbereich (A) hat, der ein durch die Art und Anzahl der an den Verteilerkanal (4) angeschlossenen Kavitäten (6a, 6c, 6c) bestimmtes Volumen zur Aufnahme von Spritzgussmaterial beim Spritzgussvorgang hat.

2. Spritzgusswerkzeug nach Anspruch 1, **dadurch gekennzeichnet, dass** der Ausgleichsvolumenbereich (A) eine Aufnahmeöffnung (9a, 9b) hat und ein Ausgleichseinsatz (8a, 8b) vorhanden ist, der in die Aufnahmeöffnung (9a, 9b) wahlweise einsetzbar ist, wobei der Ausgleichseinsatz (8a, 8b) eine mit dem Verteilerkanal (4) kommunizierende Vertiefung zur Bereitstellung eines Ausgleichsvolumens (7, 7a, 7b) hat und unterschiedliche Ausgleichseinsätze (8a, 8b) mit voneinander unterschiedlichen Ausgleichsvolumen (7, 7a, 7b) wahlweise in die Aufnahmeöffnung (9a, 9b) einsetzbar sind.

3. Spritzgusswerkzeug nach Anspruch 2, **dadurch gekennzeichnet, dass** die Ausgleichseinsätze (8a, 8b) eine Stirnseite mit einer Vertiefung haben, die das Ausgleichsvolumen (7, 7a, 7b) bereitstellt, wobei eine radial nach außen führende Nut (10) in die Vertiefung übergeht und der Verteilerkanal (4) über die Nut (10) kommunizierend mit der Vertiefung verbindbar ist, wenn der Ausgleichseinsatz (8a, 8b) in die Aufnahmeöffnung (9a, 9b) des Spritzgusswerkzeuges (1) eingesetzt ist.

4. Spritzgusswerkzeug nach Anspruch 2 oder 3, **dadurch gekennzeichnet, dass** die Ausgleichseinsätze (8a, 8b) zylinderförmig sind.

5. Spritzgusswerkzeug nach einem der Ansprüche 2 bis 4, **dadurch gekennzeichnet, dass** ein Set von Ausgleichseinsätzen (8a, 8b) vorhanden ist, die an ihrer Stirnseite Vertiefungen mit unterschiedlichen Durchmessern voneinander haben.

6. Spritzgusswerkzeug nach einem der Ansprüche 2 bis 5, **dadurch gekennzeichnet, dass** ein Set von Ausgleichseinsätzen (8a, 8b) vorhanden ist, die mindestens zwei unterschiedliche Außendurchmesser haben, wobei das Spritzgusswerkzeug (1) durch die Kavitäten (6a, 6c, 6c) bestimmte Aufnahmeöffnungen (9a, 9b) mit einem Durchmesser haben, der an ein an die Kavitäten (6a, 6c, 6c) angepasstes Ausgleichsvolumen (7, 7a, 7b) bereitstellt.

7. Spritzgusswerkzeug nach einem der Ansprüche 1 bis 6, **dadurch gekennzeichnet, dass** zwei oder mehr Kavitäten (6a, 6c, 6c) mit einem Verteilerkanal (4) verbunden sind und der Verteilerkanal (4) kommunizierend mit mindestens einem Ausgleichsvolumen (7, 7a, 7b) verbunden ist, wobei die Lage eines der Ausgleichsvolumen (7, 7a, 7b) zu einer der Kavitäten (6a, 6c, 6c) und die Größe des Ausgleichsvolumens (7, 7a, 7b) durch die Kombination der Kavitäten (6a, 6c, 6c) bestimmt ist.

8. Spritzgusswerkzeug nach einem der vorhergehenden Ansprüche, **dadurch gekennzeichnet, dass** der Ausgleichsvolumenbereich (A) als Abzweig an dem Verteilerkanal (4) im Bereich des Übergangs des Verteilerkanals (4) in die zugehörige Kavität (6a, 6c, 6c) angeschlossen ist.

9. Spritzgusswerkzeug nach einem der vorhergehenden Ansprüche, **dadurch gekennzeichnet, dass** bei mindestens einer an den Verteilerkanal (4) angeschlossenen Kavität (6a, 6c, 6c) jeweils benachbart zu einem Übergang des Verteilerkanals (4) in eine Kavität (6a, 6c, 6c) ein Ausgleichsvolumen (7, 7a, 7b) an den Verteilerkanal (4) angeschlossen ist.

10. Spritzgusswerkzeug nach einem der vorhergehenden Ansprüche, **dadurch gekennzeichnet, dass** das Spritzgusswerkzeug (1) eine Spritzgussmaterial-Verteileinheit mit einem düsenseitigen Einbaurahmen und einem auswerferseitigen Einbaurahmen hat, wobei der düsenseitige Einbaurahmen und/oder der auswerferseitige Einbaurahmen zur Aufnahme von Kavitäten (6a, 6c, 6c) aufweisenden Formeinsätzen (3a, 3b) ausgebildet ist und wobei die Verteilerkanäle mit den Ausgleichsvolumenbereichen (A) in den Formeinsätzen (3a, 3b) und/oder in dem düsenseitigen Einbaurahmen und/oder dem auswerferseitigen Einbaurahmen eingebracht sind.

11. Verfahren zur Herstellung von Spritzguss-Formteilen (11a, 11b, 11c) mit einem Spritzgusswerkzeug (1) nach einem der vorhergehenden Ansprüche, **gekennzeichnet durch**
- Einbringen eines Ausgleichsvolumens (7, 7a, 7b) zur Ausbildung des Spritzgusswerkzeugs (1), wobei das Ausgleichsvolumen (7, 7a, 7b) in kommunizierender Verbindung mit dem Verteilerkanal (4) steht, mit einem an die Art und die Anzahl der an den Verteilerkanal (4) angeschlossenen Kavitäten (6a, 6c, 6c) adaptierten Volumen zur Aufnahme von Spritzgussmaterial.

12. Verfahren nach Anspruch 11, **gekennzeichnet durch**
- Auswählen von Ausgleichseinsätzen (8a, 8b) aus einem Set unterschiedlicher Ausgleichseinsätze (8a, 8b), die verschiedene Ausgleichsvolumina (7, 7a, 7b) bereitstellen, derart, dass die Anzahl, Position und Größe der Ausgleichsvolumina (7, 7a, 7b) an die Art und Anzahl der an den Verteilerkanal (4) angeschlossenen Kavitäten (6a, 6c, 6c) adaptiert wird, und
- Einsetzen der ausgewählten Ausgleichseinsätze (8a, 8b) in jeweils eine zugeordnete Aufnahmeöffnung (9a, 9b) im Ausgleichsvolumenbereich (A) des Spritzgusswerkzeuges (1).
